# EUROPEAN PATENT APPLICATION

(11) **EP 4 206 845 A1**
(43) Date of publication of application: **05.07.2023**
(21) Application number: 20956230.5
(22) Date of filing: 30.09.2020
(51) Int. Cl.: G05D 1/02

(54) **SELF-PROPELLED DEVICE**

(71) Applicant: DMG Mori Co., Ltd., Yamatokoriyama-shi, Nara 639-1160 (JP)
(72) Inventor: NAGASUE, Hideki, Yamatokoriyama-shi, Nara 639-1160 (JP); MAEDA, Ryota, Yamatokoriyama-shi, Nara 639-1160 (JP); NAKAGAWA, Masaaki, Yamatokoriyama-shi, Nara 639-1160 (JP); TANAKA, Hideaki, Yamatokoriyama-shi, Nara 639-1160 (JP); OBA, Yuta, Yamatokoriyama-shi, Nara 639-1160 (JP)
(74) Representative: Isarpatent
(86) International application number: PCT/JP2020/037136
(87) International publication number: WO 2022/070302

(57) **Abstract**

A self-propelled device (100) includes a wheel-driven traveling body (10) and a laser sensor (105). The laser sensor (105) emits laser light while rotating the laser light around the laser sensor (105) and receives reflected light of the laser light to output two-dimensional distance data representing a distance to an object located around the laser sensor (105) for each angle around the laser sensor (105). The traveling body (10) includes a controller (101) that controls traveling of the traveling body (10) on the basis of the two-dimensional distance data output from the laser sensor (105). The laser sensor (105) is provided on the traveling body (10) such that a scan plane that is a region through which the laser light passes during rotation of the laser light has a predetermined angle with respect to a horizontal plane.

## Description

### TECHNICAL FIELD

The present disclosure relates to a wheel-driven self-propelled device.

### BACKGROUND ART

In a production system such as a factory, unmanned operation is desired. In order to achieve unmanned operation, self-propelled devices are being developed. The self-propelled device conveys a workpiece that has not been machined, a tool, or the like to each machine tool, or collects a workpiece that has been machined by each machine tool, a used tool, or the like.

Japanese Patent Laying-Open No. 2019-8359 (PTL 1) discloses a self-propelled device that aims to "satisfactorily create map information". This self-propelled device is provided with: a distance measurement device that rotationally drives a light projection unit emitting projection light and that outputs distance measurement data on the basis of received reflection light reflected by a measurement target; a map creation unit that creates map information on the basis of the distance measurement data; and an obstacle sensor that detects obstacles.

### CITATION LIST

### PATENT LITERATURE

PTL 1: Japanese Patent Laying-Open No. 2019-8359

### SUMMARY OF INVENTION

### TECHNICAL PROBLEM

The self-propelled device disclosed in PTL 1 detects an obstacle on the basis of projection light emitted in a horizontal direction. Therefore, the self-propelled device can detect an obstacle located in the traveling direction of a mobile device, but cannot detect an obstacle located above or below the self-propelled device. Accordingly, a self-propelled device capable of detecting an obstacle above or below the self-propelled device is desired.

### SOLUTION TO PROBLEM

In an example of the present disclosure, a self-propelled device includes a traveling body that is driven by a wheel and a laser sensor. The laser sensor emits laser light while rotating the laser light around the laser sensor and receives reflected light of the laser light to output two-dimensional distance data representing a distance to an object located around the laser sensor for each angle around the laser sensor. The self-propelled device includes a controller that controls traveling of the traveling body on a basis of the two-dimensional distance data output from the laser sensor. The laser sensor is provided on the traveling body such that a scan plane that is a region through which the laser light passes during rotation of the laser light has a predetermined angle with respect to a horizontal plane.

In an example of the present disclosure, the self-propelled device further includes an arm robot mounted on the traveling body. The laser sensor is provided on the traveling body such that the scan plane includes a movement range of the arm robot.

In an example of the present disclosure, the self-propelled device further includes a cover that accommodates the laser sensor. The laser sensor or the cover is provided on the traveling body such that an incident angle of the laser light with respect to the cover is greater than 0 degrees and smaller than 90 degrees.

In an example of the present disclosure, the laser sensor or the cover is provided on the traveling body such that a minimum incident angle of the laser light incident on the cover during rotation of the laser light decreases with an increase in a distance between the laser sensor and the cover.

In an example of the present disclosure, the controller sequentially acquires the two-dimensional distance data from the laser sensor while rotating the traveling body about a rotation axis in a vertical direction, and executes processing of generating three-dimensional data representing a space around the traveling body on a basis of the two-dimensional distance data that has been sequentially acquired.

In an example of the present disclosure, the processing of generating the three-dimensional data is executed on a basis of a condition that the self-propelled device is included in a preset region.

In an example of the present disclosure, the self-propelled device is capable of communicating with a user terminal for operating the self-propelled device. The processing of generating the three-dimensional data is executed on a basis of reception of an execution command based on an operation for executing the processing from the user terminal.

In an example of the present disclosure, the traveling body includes three or more drive wheels.

The above and other objects, features, aspects and advantages of the present invention will become apparent from the following detailed description of the present invention taken in conjunction with the accompanying drawings.

### BRIEF DESCRIPTION OF DRAWINGS

Fig. 1 is a diagram illustrating an appearance of a self-propelled device.
Fig. 2 is a diagram illustrating a laser sensor and two-dimensional distance data output from the laser sensor.
Fig. 3 is a diagram illustrating the self-propelled device viewed from side.
Fig. 4 is a diagram illustrating the self-propelled device viewed from above.
Fig. 5 is a diagram illustrating an example of an arrangement relationship between the laser sensor and a cover.
Fig. 6 is a diagram illustrating an example of a hardware configuration of the self-propelled device.
Fig. 7 is a diagram illustrating an example of a functional configuration of the self-propelled device.
Fig. 8 is a diagram illustrating a state of rotation scan by the self-propelled device in time series.
Fig. 9 is a diagram illustrating a self-propelled device according to a first modification as viewed in a forward direction.
Fig. 10 is a diagram illustrating the self-propelled device according to the first modification as viewed from above.
Fig. 11 is a diagram illustrating a self-propelled device according to a second modification as viewed in a forward direction.
Fig. 12 is a diagram illustrating the self-propelled device according to the second modification as viewed from above.
Fig. 13 is a diagram illustrating a self-propelled device according to a third modification as viewed from a left surface SF3 side.
Fig. 14 is a diagram illustrating the self-propelled device according to the third modification as viewed from above.

### DESCRIPTION OF EMBODIMENTS

An embodiment of the present invention will now be described in detail with reference to the drawings. In the following description, the same parts and components are denoted by the same reference signs. Their names and functions are also the same. Therefore, detailed descriptions thereof will not be repeated. Note that the embodiment and modifications described below may be appropriately and selectively combined.

### <A. Self-propelled device 100>

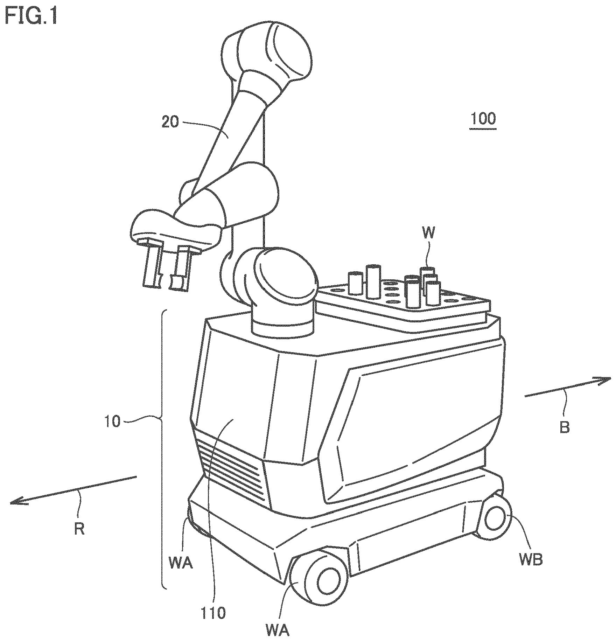

With reference to Fig. 1, a self-propelled device 100 will be described. Fig. 1 is a diagram illustrating an appearance of self-propelled device 100.

Self-propelled device 100 conveys a conveyance object such as a workpiece or a tool to any place. Self-propelled device 100 includes a traveling body 10 and an arm robot 20.

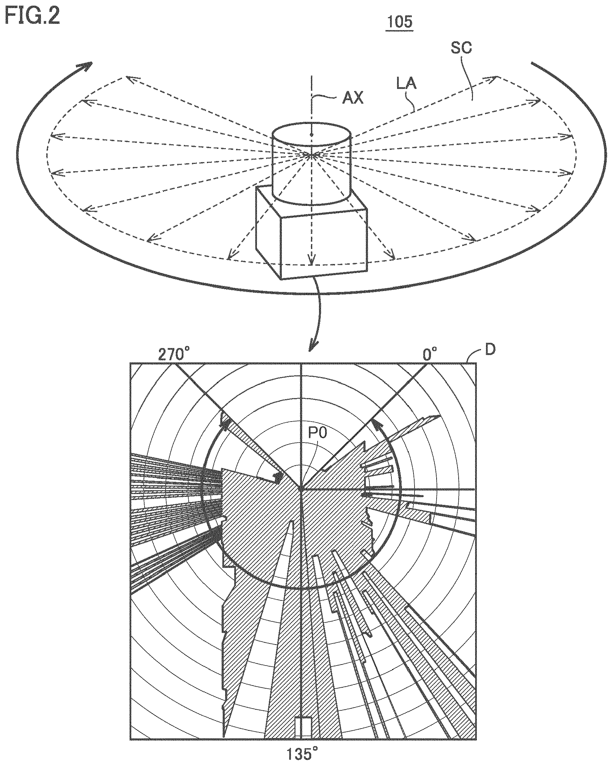

Traveling body 10 includes a cover 110. A laser sensor 105 (see Fig. 2) to be described later is provided inside cover 110. Self-propelled device 100 controls traveling of traveling body 10 on the basis of a detection result of laser sensor 105.

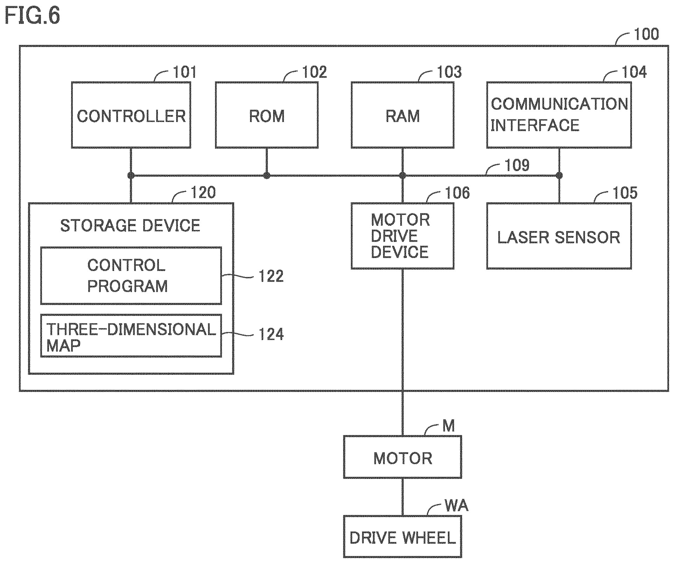

Traveling body 10 includes drive wheels WA and non-drive wheels WB. Drive wheels WA and non-drive wheels WB are, for example, omni wheels. Drive wheels WA are rotationally driven by receiving a driving force of a motor M (see Fig. 6) to be described later. On the other hand, non-drive wheels WB follow drive wheels WA without directly receiving the driving force of the motor.

Although Fig. 1 illustrates traveling body 10 having two drive wheels WA, any number of drive wheels WA may be provided. Typically, traveling body 10 has two or more drive wheels WA.

Although Fig. 1 illustrates traveling body 10 having two non-drive wheels WB, any number of non-drive wheels WB may be provided. Typically, traveling body 10 has one or more non-drive wheels WB.

Although Fig. 1 illustrates an example in which drive wheels WA are front wheels and non-drive wheels WB are rear wheels, drive wheels WA may be rear wheels and non-drive wheels WB may be front wheels.

In one aspect, traveling body 10 is provided with two drive wheels WA. In this case, first and second drive wheels WA are responsible for traveling in a forward direction R and a backward direction B.

In another aspect, traveling body 10 is provided with three or more drive wheels WA. In this case, first and second drive wheels WA are responsible for traveling in forward direction R and backward direction B, and a third drive wheel WA is responsible for traveling in a direction orthogonal to forward direction R. Typically, third drive wheel WA is provided at a lower portion of traveling body 10 at a position away from the position of the center of gravity of traveling body 10 by a predetermined distance in forward direction R or backward direction B. Self-propelled device 100 can rotate traveling body 10 around the vertical direction passing through the center of gravity of traveling body 10 as the rotation center by driving third drive wheel WA.

Arm robot 20 is provided on traveling body 10. Further, a place for placing a workpiece W is provided on traveling body 10. Arm robot 20 grips workpiece W and moves workpiece W to a designated place.

Although the example in which 4- to 7-axis arm robot 20 is installed on traveling body 10 has been described above, various conveyance devices capable of conveying a conveyance object such as a workpiece or a tool can be installed on traveling body 10. The conveyance device may be a 2- or 3-axis robot (for example, an autoloader).

### <B. Laser sensor 105>

Next, with reference to Fig. 2, laser sensor 105 provided inside cover 110 of self-propelled device 100 will be described. Fig. 2 is a diagram illustrating laser sensor 105 and two-dimensional distance data D output from laser sensor 105.

Laser sensor 105 is configured to emit laser light LA while rotating laser light LA about a central axis AX of laser sensor 105 as a rotation center, and receive reflected light of laser light LA. As a result, laser sensor 105 outputs two-dimensional distance data D representing the distance to a surrounding object for each angle based on central axis AX. Two-dimensional distance data D represents the distance to each object located in a scan plane SC for each irradiation angle.

More specifically, laser sensor 105 includes an emission unit, a mirror, and a light receiving unit. The emission unit emits laser light to the mirror. The mirror is rotatable about central axis AX by a motor (not illustrated), and reflects laser light LA in each direction. Thus, laser sensor 105 emits laser light LA in each direction. In a case where the object is located around laser sensor 105, laser light LA is reflected by the object and returns to laser sensor 105. Laser sensor 105 receives the reflected light by the light receiving unit.

Laser sensor 105 receives reflected light from an object and calculates a distance to the object. As an example, laser sensor 105 calculates the distance from laser sensor 105 to the object on the basis of the time from irradiation of laser light LA to reception of the reflected light of laser light LA. Typically, laser sensor 105 calculates the distance to the object by multiplying the speed of light by the time. Laser sensor 105 outputs two-dimensional distance data D representing the distance for each angle based on central axis AX by associating the distance with the irradiation angle of laser light LA.

The angular range of the distance data output by laser sensor 105 is arbitrarily set. In the example of Fig. 2, an angular range of 0 degrees to 270 degrees is set to be effective.

### <C. Orientation of laser sensor 105>

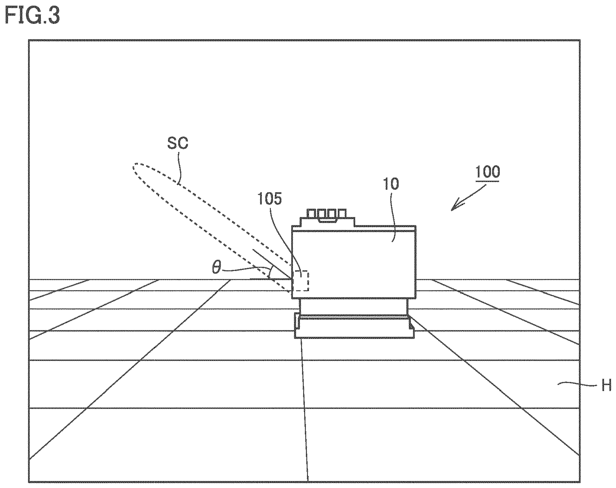

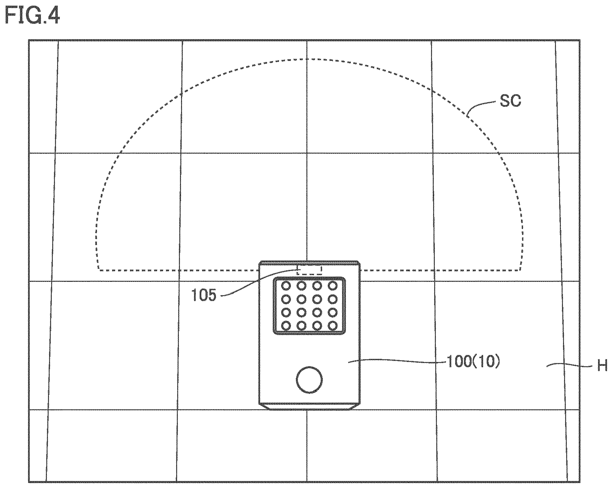

Next, with reference to Figs. 3 and 4, the orientation of laser sensor 105 with respect to self-propelled device 100 will be described. Fig. 3 is a diagram illustrating self-propelled device 100 as viewed from side. Fig. 4 is a diagram illustrating self-propelled device 100 as viewed from above.

Laser sensor 105 is provided, for example, on the front surface of traveling body 10. The front surface of self-propelled device 100 is a surface directed to the forward direction of self-propelled device 100 out of surfaces constituting traveling body 10. In this case, the range of the effective angle of distance measurement is set to a range of 180 degrees on the forward direction side. The range of 180 degrees on the backward direction side is set to be ineffective.

As illustrated in Figs. 3 and 4, laser sensor 105 is provided on traveling body 10 such that scan plane SC with laser light LA has a predetermined angle θ with respect to a horizontal plane H (ground). That is, laser sensor 105 is provided on traveling body 10 such that scan plane SC is not parallel to horizontal plane H.

In one aspect, angle θ is greater than 0 degrees and greater than 90 degrees. Positive angle θ represents an angle above horizontal plane H. When angle θ is greater than 0 degrees and greater than 90 degrees, self-propelled device 100 can detect an obstacle located above traveling body 10. Typically, angle θ is greater than 30 degrees and less than 60 degrees. Fig. 3 illustrates an example in which angle θ is about 45 degrees.

In another aspect, angle θ is greater than -90 degrees and less than 0 degrees. Negative angle θ represents an angle below horizontal plane H. When angle θ is greater than -90 degrees and less than 0 degrees, self-propelled device 100 can detect an obstacle located below traveling body 10. Typically, angle θ is greater than -60 degrees and less than -30 degrees.

Due to laser sensor 105 being provided on traveling body 10 so as to be inclined at predetermined angle θ with respect to scan plane SC as described above, self-propelled device 100 can detect an obstacle located above traveling body 10 or below traveling body 10. Further, self-propelled device 100 can three-dimensionally scan the surrounding shape by sequentially acquiring two-dimensional distance data D from laser sensor 105 while being self-propelled.

Typically, laser sensor 105 is provided on traveling body 10 such that scan plane SC includes a movement range of arm robot 20 (see Fig. 1). In other words, scan plane SC overlaps at least a part of the movement range of arm robot 20. As a result, laser sensor 105 can capture the movement of arm robot 20.

### <D. Arrangement relationship between laser sensor 105 and cover 110>

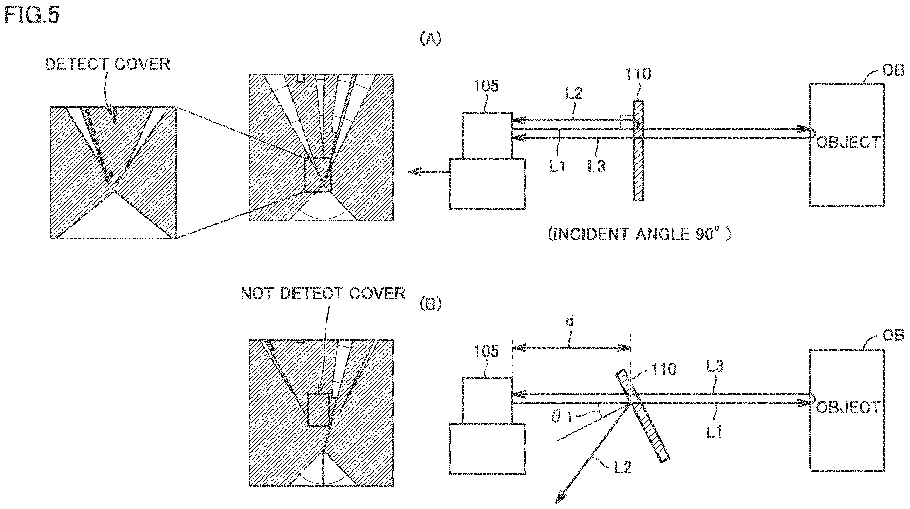

Next, with reference to Fig. 5, an arrangement relationship between laser sensor 105 and cover 110 will be described. Fig. 5 is a diagram illustrating an example of an arrangement relationship between laser sensor 105 and cover 110.

Cover 110 is made of, for example, a material that transmits laser light L1 emitted from laser sensor 105. As an example, cover 110 is a resin cover.

Laser light L1 illustrated in Figs. 5(A) and 5(B) indicates laser light which is incident on cover 110 during rotation of laser light and which has a minimum incident angle θ with respect to cover 110. Incident angle θ indicates an angle formed by laser light L1 and the perpendicular direction of the cover surface. The cover surface indicates a surface on which laser light L1 is incident among surfaces constituting cover 110.

Fig. 5(A) illustrates an example in which laser light L1 is incident on cover 110 at a right angle. When incident angle θ is 0 degrees, a part of laser light L1 is reflected by cover 110 and returns to laser sensor 105 as reflected light L2. On the other hand, the rest of laser light L1 is reflected by an object OB and returns to laser sensor 105 as reflected light L3. In this case, laser sensor 105 erroneously detects cover 110 as an obstacle by reflected light L2.

Fig. 5(B) illustrates an example in which laser light L1 is not incident on cover 110 at a right angle. When incident angle θ is greater than 0 degrees, reflected light L2 from cover 110 does not return to laser sensor 105. On the other hand, reflected light L3 from object OB returns to laser sensor 105. As a result, laser sensor 105 can detect object OB without detecting cover 110. For this reason, laser sensor 105 or cover 110 is provided on traveling body 10 so that laser light L1 incident on cover 110 during rotation of the laser light does not enter cover 110 at a right angle. In other words, laser sensor 105 or cover 110 is provided on traveling body 10 such that incident angle θ is greater than 0 degrees and smaller than 90 degrees.

The degree of inclination of cover 110 with respect to laser light L1 is determined according to a distance d between laser sensor 105 and cover 110. Distance d represents a distance through which laser light L1 passes between laser sensor 105 and cover 110.

More specifically, laser sensor 105 or cover 110 is provided on traveling body 10 such that incident angle θ1 decreases with an increase in distance d. In other words, laser sensor 105 or cover 110 is provided on traveling body 10 such that incident angle θ1 increases with a decrease in distance d. As a result, self-propelled device 100 can more reliably prevent that cover 110 is erroneously detected as an obstacle.

### <E. Hardware configuration of self-propelled device 100>

Next, with reference to Fig. 6, a hardware configuration of self-propelled device 100 will be described. Fig. 6 is a diagram illustrating an example of a hardware configuration of self-propelled device 100.

Self-propelled device 100 includes a controller 101, a read only memory (ROM) 102, a random access memory (RAM) 103, a communication interface 104, laser sensor 105 (see Fig. 2) described above, a motor drive device 106, and a storage device 120. These components are connected to a bus 109.

Controller 101 includes, for example, at least one integrated circuit. The integrated circuit may be constituted by, for example, at least one central processing unit (CPU), at least one graphics processing unit (GPU), at least one application specific integrated circuit (ASIC), at least one field programmable gate array (FPGA), or a combination thereof.

Controller 101 controls the operation of self-propelled device 100 by executing various programs such as a control program 122 and an operating system. Controller 101 reads control program 122 from storage device 120 or ROM 102 to RAM 103 in response to a command to execute control program 122. RAM 103 functions as a working memory and temporarily stores various pieces of data necessary for executing control program 122.

A local area network (LAN), an antenna, and the like are connected to communication interface 104. Self-propelled device 100 implements wireless or wired communication with an external device via communication interface 104. The external device includes, for example, a server (not illustrated), a user terminal (not illustrated) for operating self-propelled device 100, and the like. The user terminal is, for example, a tablet terminal or a smartphone. A user can control traveling of self-propelled device 100 via the user terminal.

Motor drive device 106 controls the rotation of motor M in accordance with a control command from controller 101. The control command includes, for example, a forward rotation command of motor M, a reverse rotation command of motor M, a rotation speed of motor M, and the like. As motor M, a stepping motor, a servo motor, or the like is used, for example. Drive wheels WA (see Fig. 1) are connected to motor M. The number of motors M is the same as the number of drive wheels WA.

Storage device 120 is, for example, a storage medium such as a hard disk or a flash memory. Storage device 120 stores control program 122, a three-dimensional map 124, and the like. Details of three-dimensional map 124 will be described later. Control program 122 and three-dimensional map 124 are not limited to be stored in storage device 120, and may be stored in a storage area (for example, cache memory or the like) of controller 101, ROM 102, RAM 103, an external device (for example, a server), or the like.

In addition, control program 122 may be provided not as a single program but by being incorporated in a part of arbitrary program. In this case, traveling control processing of self-propelled device 100 by control program 122 is implemented in cooperation with the arbitrary program. The program not including a part of modules as described above does not depart from the gist of control program 122 according to the present embodiment. Further, some or all of the functions provided by control program 122 may be implemented by dedicated hardware. Further, self-propelled device 100 may be configured in a form of a so-called cloud service in which at least one server executes a part of the processing of control program 122.

### <F. Functional configuration of self-propelled device 100>

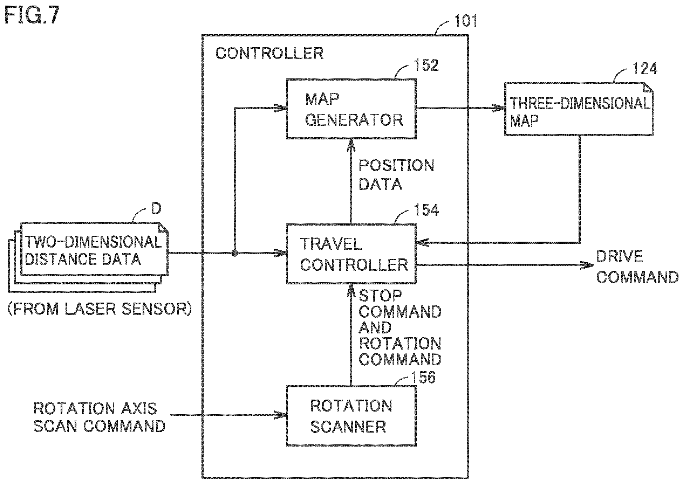

With reference to Fig. 7, a function of self-propelled device 100 will be described. Fig. 7 is a diagram illustrating an example of the functional configuration of self-propelled device 100.

As illustrated in Fig. 7, controller 101 of self-propelled device 100 includes a map generator 152, a travel controller 154, and a rotation scanner 156 as an example of a functional configuration. These components will be sequentially described below.

### (F1. Map generator 152)

Map generator 152 generates three-dimensional map 124 (three-dimensional data) representing a space around self-propelled device 100 on the basis of two-dimensional distance data D sequentially acquired from laser sensor 105 during driving of self-propelled device 100.

Three-dimensional map 124 is generated by, for example, simultaneous localization and mapping (SLAM) technology. Three-dimensional map 124 is information which is generated for specifying the position of self-propelled device 100 and which indicates the position of a stationary object in an area where self-propelled device 100 travels. The stationary object is, for example, a wall, a shelf, or the like.

Three-dimensional map 124 is generated, for example, by the user manually operating self-propelled device 100 using the user terminal. In this case, when an operation signal corresponding to the user's operation is transmitted to controller 101 via communication interface 104, controller 101 outputs a command to motor drive device 106 according to the operation signal, and controls traveling of self-propelled device 100. At this time, controller 101 maps the position of the object around self-propelled device 100 on three-dimensional map 124 on the basis of two-dimensional distance data D input from laser sensor 105 and the position of self-propelled device 100. The position of self-propelled device 100 is specified on the basis of, for example, drive information of motor drive device 106. Thus, information indicating the presence or absence of an object is associated with each of the three-dimensional coordinate values (x, y, z) in three-dimensional map 124.

If scan plane SC (see Fig. 3) of laser sensor 105 is parallel to the horizontal plane, laser sensor 105 cannot acquire information of an object in the height direction and can generate only a two-dimensional map. On the other hand, in self-propelled device 100 according to the embodiment, scan plane SC (see Fig. 3) of laser sensor 105 is inclined with respect to the horizontal plane. Therefore, self-propelled device 100 can three-dimensionally scan the surroundings while moving.

Furthermore, when generating three-dimensional map 124, map generator 152 does not need to use a laser sensor (also referred to as a "three-dimensional laser sensor" below) capable of measuring a three-dimensional shape. The cost of self-propelled device 100 can be greatly reduced by not using the three-dimensional laser sensor which is very expensive.

### (F2. Travel controller 154)

Next, the function of travel controller 154 illustrated in Fig. 7 will be described. Travel controller 154 is a functional configuration for controlling traveling of self-propelled device 100.

Travel controller 154 compares two-dimensional distance data D input from laser sensor 105 with three-dimensional map 124 to specify the current position of self-propelled device 100. Controller 101 specifies the current position so that self-propelled device 100 travels along a predetermined route on three-dimensional map 124.

Furthermore, travel controller 154 detects an obstacle around self-propelled device 100 on the basis of two-dimensional distance data D sequentially acquired from laser sensor 105 during driving of self-propelled device 100, and controls traveling of self-propelled device 100 so that self-propelled device 100 avoids collision with the obstacle. The obstacle includes, for example, a moving object such as a person or another self-propelled device 100, and a stationary object such as a wall or a shelf.

While no obstacle is detected, travel controller 154 controls the traveling of self-propelled device 100 so that self-propelled device 100 travels along a predetermined route on three-dimensional map 124. On the other hand, when an obstacle is detected, travel controller 154 controls the traveling of self-propelled device 100 so that self-propelled device 100 avoids collision with the obstacle.

In one aspect, travel controller 154 controls the traveling of self-propelled device 100 so that self-propelled device 100 avoids the obstacle when the distance to the obstacle is greater than or equal to a predetermined distance. On the other hand, when the distance to the obstacle is less than the predetermined distance, travel controller 154 stops the traveling of self-propelled device 100.

In another aspect, travel controller 154 executes rotation scan processing to be described later when an obstacle is detected.

### (F3. Rotation scanner 156)

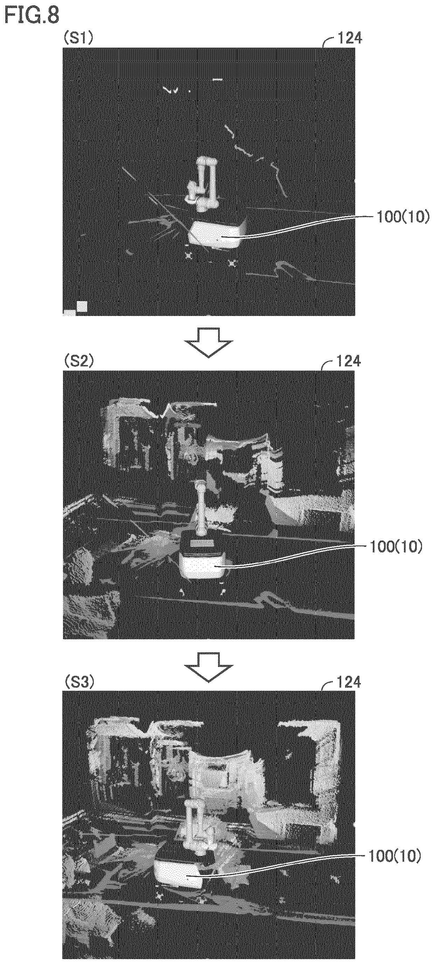

Next, with reference to Fig. 8, the function of rotation scanner 156 illustrated in Fig. 7 will be described. Fig. 8 is a diagram illustrating a state of rotation scan by self-propelled device 100 in time series.

Note that, although self-propelled device 100 is drawn in three-dimensional map 124 in the example of Fig. 8, self-propelled device 100 is just drawn for convenience of description.

The rotation scanner 156 outputs a stop command and a rotation command to travel controller 154 when receiving a rotation scan command. Based on this operation, self-propelled device 100 starts the rotation of traveling body 10 about the rotation axis in the vertical direction (step S1). Typically, the rotation axis passes through the center of gravity of self-propelled device 100.

Map generator 152 sequentially acquires two-dimensional distance data D from laser sensor 105 during rotation of self-propelled device 100, and maps information regarding the object around traveling body 10 on three-dimensional map 124 on the basis of sequentially acquired two-dimensional distance data D (steps S2 and S3). As a result, three-dimensional data representing the space around self-propelled device 100 is generated.

As described above, in self-propelled device 100 according to the embodiment, scan plane SC (see Fig. 3) of laser sensor 105 is inclined with respect to the horizontal plane. Therefore, self-propelled device 100 can three-dimensionally scan the surroundings in detail while rotating in place. In addition, there is no need to use a laser sensor (three-dimensional laser sensor) capable of measuring a three-dimensional shape for three-dimensional scanning.

Note that the rotation scan processing can be executed at any timing. In one aspect, the rotation scan processing is executed on the basis of a condition that self-propelled device 100 is included within a preset region (also referred to as a "dangerous region" below).

More specifically, three-dimensional map 124 is displayed on the user terminal, and the user sets the dangerous region on three-dimensional map 124 using an input device such as a mouse. As an example, a complex path such as a blind alley or a busy area is set as the dangerous region. The user terminal transmits the set dangerous region to self-propelled device 100. Self-propelled device 100 stores the setting of the dangerous region received from the user terminal. Thereafter, self-propelled device 100 monitors whether or not its position has reached the dangerous region during traveling. When the position of self-propelled device 100 reaches the dangerous region, a rotation scan command is issued to rotation scanner 156. As a result, the rotation scan processing is executed, and self-propelled device 100 can check the surrounding situation in the dangerous region in more detail.

In another aspect, the rotation scan processing is executed on the basis of reception of an execution command based on an operation of executing the processing from the user terminal. That is, the user can perform an operation of executing the rotation scan processing at any timing, such as during generation of three-dimensional map 124 or during conveyance of the conveyance object, using the user terminal. As a result, the user can make self-propelled device 100 execute the rotation scan processing at any place, and can make self-propelled device 100 recognize space information regarding a dangerous spot such as a complex path or a busy area.

### <G. First modification>

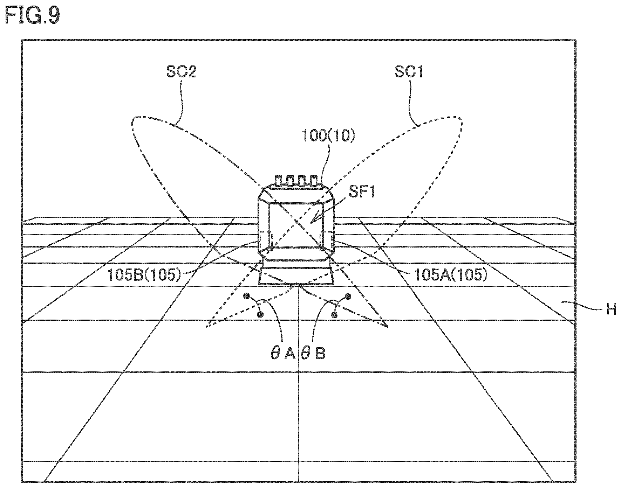

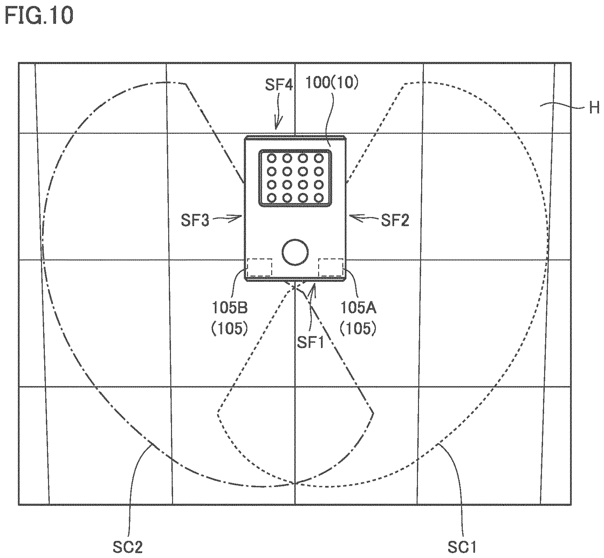

Next, with reference to Figs. 9 and 10, a first modification of self-propelled device 100 will be described. Fig. 9 is a diagram illustrating self-propelled device 100 according to the first modification as viewed in the forward direction. Fig. 10 is a diagram illustrating self-propelled device 100 according to the first modification as viewed from above.

Self-propelled device 100 illustrated in Figs. 3 and 4 described above includes one laser sensor 105. On the other hand, self-propelled device 100 according to the present modification includes two laser sensors 105A and 105B.

The functions and structures of laser sensors 105A and 105B are the same as those of laser sensor 105 described above, and thus the description thereof will not be repeated.

In the following, the surface of traveling body 10 as viewed in the forward direction of self-propelled device 100 is referred to as a "front surface SF1". In addition, the right surface of traveling body 10 as viewed in the forward direction of self-propelled device 100 is referred to as a "right surface SF2". In addition, the left surface of traveling body 10 as viewed in the forward direction of self-propelled device 100 is referred to as a "left surface SF3". In addition, the surface of self-propelled device 100 as viewed in the backward direction of self-propelled device 100 is referred to as a "rear surface SF4".

Laser sensor 105A is provided at the front right corner formed by front surface SF1 and right surface SF2. Thus, laser sensor 105A can detect an obstacle on the front surface SF1 side and an obstacle on the right surface SF2 side.

Laser sensor 105A is provided on traveling body 10 such that scan plane SC1 with laser light forms a predetermined angle θA with horizontal plane H. In other words, laser sensor 105A is provided on traveling body 10 such that scan plane SC1 is not parallel to horizontal plane H. Typically, angle θA is greater than -90 degrees and less than 0 degrees, or greater than 0 degrees and less than 90 degrees. Positive angle θA represents an angle above horizontal plane H. Negative angle θA represents an angle below horizontal plane H. Fig. 9 illustrates an example in which angle θA is about 45 degrees.

Laser sensor 105B is provided at the front left corner formed by front surface SF1 and left surface SF3. Thus, laser sensor 105B can detect an obstacle on the front surface SF1 side and an obstacle on the left surface SF3 side.

Laser sensor 105B is provided on traveling body 10 such that scan plane SC2 with laser light forms a predetermined angle θB with horizontal plane H. In other words, laser sensor 105B is provided on traveling body 10 such that scan plane SC2 is not parallel to horizontal plane H. Typically, angle θB is greater than -90 degrees and less than 0 degrees, or greater than 0 degrees and less than 90 degrees. Positive angle θB represents an angle above horizontal plane H. Negative angle θB represents an angle below horizontal plane H. Fig. 9 illustrates an example in which angle θB is about 45 degrees.

Laser sensor 105A and laser sensor 105B are disposed such that scan plane SC1 and scan plane SC2 intersect each other. As an example, scan plane SC1 and scan plane SC2 are orthogonal to each other.

### <H. Second modification>

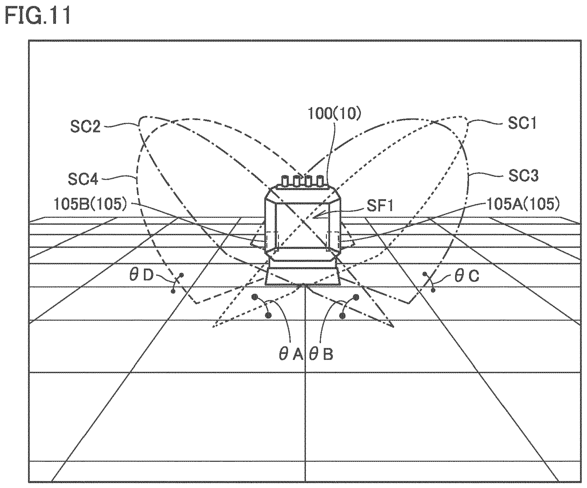

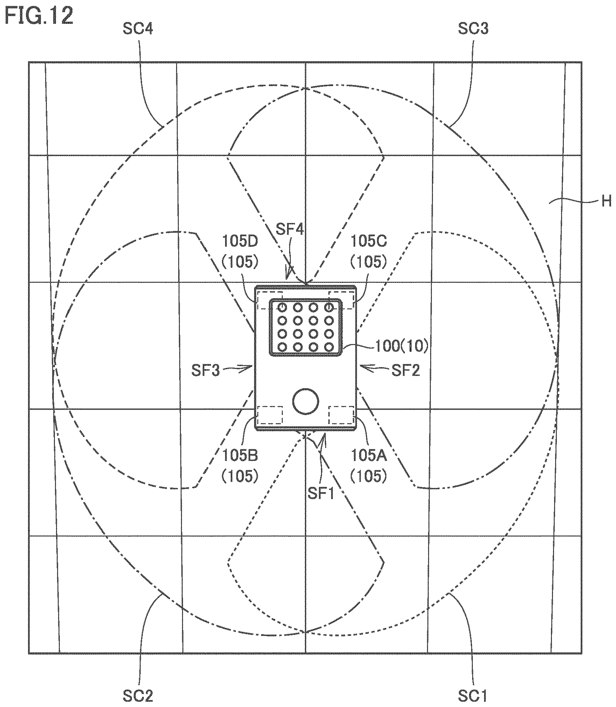

Next, with reference to Figs. 11 and 12, a second modification of self-propelled device 100 will be described. Fig. 11 is a diagram illustrating self-propelled device 100 according to the second modification as viewed in the forward direction. Fig. 12 is a diagram illustrating self-propelled device 100 according to the second modification as viewed from above.

Self-propelled device 100 illustrated in Figs. 9 and 10 described above includes two laser sensors 105A and 105B. On the other hand, self-propelled device 100 according to the present modification includes four laser sensors 105A to 105D.

The functions and structures of laser sensors 105A to 105D are the same as those of laser sensor 105 described above, and thus the description thereof will not be repeated. In addition, the arrangement of laser sensors 105A and 105B is as described in "G. First modification", and thus, the description thereof will not be repeated.

Laser sensor 105C is provided at the rear right corner formed by right surface SF2 and rear surface SF4. Thus, laser sensor 105C can detect an obstacle on the right surface SF2 side and an obstacle on the rear surface SF4 side.

Laser sensor 105C is provided on traveling body 10 such that scan plane SC3 with laser light forms a predetermined angle θC with horizontal plane H. In other words, laser sensor 105C is provided on traveling body 10 such that scan plane SC3 is not parallel to horizontal plane H. Typically, angle θC is greater than -90 degrees and less than 0 degrees, or greater than 0 degrees and less than 90 degrees. Positive angle θC represents an angle above horizontal plane H. Negative angle θC represents an angle below horizontal plane H. Fig. 11 illustrates an example in which angle θC is about 45 degrees.

Laser sensor 105D is provided at the rear left corner formed by left surface SF3 and rear surface SF4. Thus, laser sensor 105D can detect an obstacle on the left surface SF3 side and an obstacle on the rear surface SF4 side.

Laser sensor 105D is provided on traveling body 10 such that scan plane SC4 with laser light forms a predetermined angle θD with horizontal plane H. In other words, laser sensor 105D is provided on traveling body 10 such that scan plane SC4 is not parallel to horizontal plane H. Typically, angle θD is greater than -90 degrees and less than 0 degrees, or greater than 0 degrees and less than 90 degrees. Positive angle θD represents an angle above horizontal plane H. Negative angle θD represents an angle below horizontal plane H. Fig. 11 illustrates an example in which angle θD is about 45 degrees.

Laser sensor 105A and laser sensor 105C are disposed such that scan plane SC1 and scan plane SC3 intersect each other. As an example, scan plane SC1 and scan plane SC3 are orthogonal to each other.

Laser sensor 105B and laser sensor 105D are disposed such that scan plane SC2 and scan plane SC4 intersect each other. As an example, scan plane SC2 and scan plane SC4 are orthogonal to each other.

Laser sensor 105C and laser sensor 105D are disposed such that scan plane SC3 and scan plane SC4 intersect each other. As an example, scan plane SC3 and scan plane SC4 are orthogonal to each other.

### <I. Third modification>

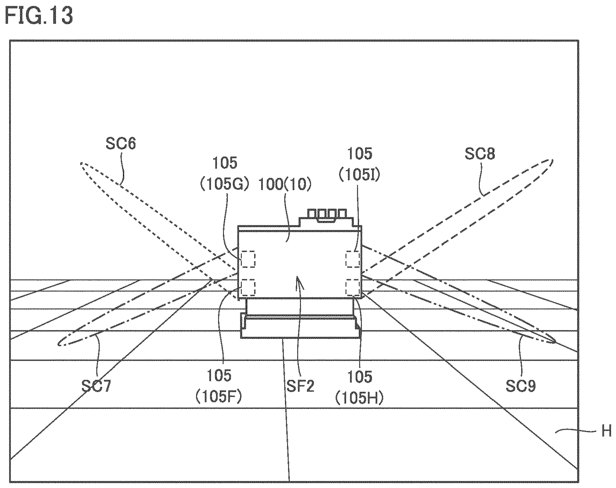

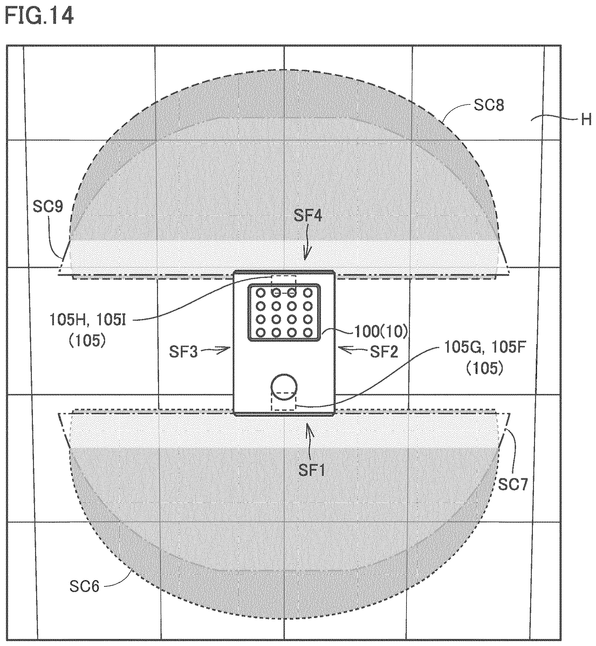

Next, with reference to Figs. 13 and 14, a third modification of self-propelled device 100 will be described. Fig. 13 is a diagram illustrating self-propelled device 100 according to the third modification as viewed from the left surface SF3 side. Fig. 14 is a diagram illustrating self-propelled device 100 according to the third modification as viewed from above.

In self-propelled device 100 illustrated in Figs. 11 and 12 described above, each of laser sensors 105A to 105D is provided at the corner of traveling body 10. On the other hand, in self-propelled device 100 according to the present modification, two laser sensors 105F and 105G are provided on front surface SF1, and two laser sensors 105H and 1051 are provided on rear surface SF4.

The functions and structures of laser sensors 105F to 1051 are the same as those of laser sensor 105 described above, and thus the description thereof will not be repeated.

Laser sensor 105F is provided on front surface SF1. Typically, laser sensor 105F is provided at the center position of front surface SF1 in the horizontal direction.

Laser sensor 105F is provided on traveling body 10 such that scan plane SC6 with laser light forms a predetermined angle θF (not illustrated) with horizontal plane H. In other words, laser sensor 105F is provided on traveling body 10 such that scan plane SC6 is not parallel to horizontal plane H. Typically, angle θF is greater than 0 degrees and less than 90 degrees. Positive angle θF represents an angle above horizontal plane H. Fig. 13 illustrates an example in which angle θF is about 45 degrees.

Laser sensor 105G is provided on front surface SF1. Typically, laser sensor 105G is provided at the center position of front surface SF1 in the horizontal direction. Furthermore, laser sensor 105F and laser sensor 105G are coaxially provided in the vertical direction. Typically, laser sensor 105G is disposed above laser sensor 105F.

Laser sensor 105G is provided on traveling body 10 such that scan plane SC7 with laser light forms a predetermined angle θG (not illustrated) with horizontal plane H. In other words, laser sensor 105G is provided on traveling body 10 such that scan plane SC7 is not parallel to horizontal plane H. Typically, angle θG is greater than -90 degrees and less than 0 degrees. Negative angle θG represents an angle below horizontal plane H. Fig. 13 illustrates an example in which angle θG is about -45 degrees.

Laser sensor 105F and laser sensor 105G are disposed such that scan plane SC6 and scan plane SC7 intersect each other. As an example, scan plane SC6 and scan plane SC7 are orthogonal to each other.

Laser sensor 105H is provided on rear surface SF4. Typically, laser sensor 105H is provided at the center position of rear surface SF4 in the horizontal direction.

Laser sensor 105H is provided on traveling body 10 such that scan plane SC8 with laser light forms a predetermined angle θH (not illustrated) with horizontal plane H. In other words, laser sensor 105H is provided on traveling body 10 such that scan plane SC8 is not parallel to horizontal plane H. Typically, angle θH is greater than 0 degrees and less than 90 degrees. Positive angle θH represents an angle above horizontal plane H. Fig. 13 illustrates an example in which angle θH is about 45 degrees.

Laser sensor 105I is provided on rear surface SF4. Typically, laser sensor 105I is provided at the center position of rear surface SF4 in the horizontal direction. Furthermore, laser sensor 105H and laser sensor 105I are coaxially provided in the vertical direction. Typically, laser sensor 105I is disposed above laser sensor 105H.

Laser sensor 105I is provided on traveling body 10 such that scan plane SC9 with laser light forms a predetermined angle θI (not illustrated) with horizontal plane H. In other words, laser sensor 105I is provided on traveling body 10 such that scan plane SC9 is not parallel to horizontal plane H. Typically, angle θI is greater than -90 degrees and less than 0 degrees. Negative angle θI represents an angle below horizontal plane H. Fig. 13 illustrates an example in which angle θI is about -45 degrees.

Laser sensor 105H and laser sensor 105I are disposed such that scan plane SC8 and scan plane SC9 intersect each other. As an example, scan plane SC8 and scan plane SC9 are orthogonal to each other.

### <J. Summary>

As described above, laser sensor 105 is provided on traveling body 10 such that scan plane SC with laser light LA has predetermined angle θ with respect to horizontal plane H. As a result, self-propelled device 100 can detect an obstacle located above traveling body 10 or below traveling body 10. Further, self-propelled device 100 can three-dimensionally scan the surrounding shape by sequentially acquiring two-dimensional distance data D from laser sensor 105 while being self-propelled.

It should be considered that the embodiment disclosed herein is illustrative in all respects and is not restrictive. The scope of the present invention is defined not by the above description but by the claims, and is intended to include meanings equivalent to the claims and all modifications within the scope.

### REFERENCE SIGNS LIST

10: traveling body, 20: arm robot, 100: self-propelled device, 101: controller, 102: ROM, 103: RAM, 104: communication interface, 105, 105A, 105B, 105C, 105D, 105F, 105G, 105H, 105I: laser sensor, 106: motor drive device, 109: bus, 110: cover, 120: storage device, 122: control program, 124: three-dimensional map, 152: map generator, 154: travel controller, 156: rotation scanner

## Claims

1. A self-propelled device comprising:
a traveling body that is driven by a wheel;
a laser sensor that emits laser light while rotating the laser light around the laser sensor and receives reflected light of the laser light to output two-dimensional distance data representing a distance to an object located around the laser sensor for each angle around the laser sensor; and
a controller that controls traveling of the traveling body on a basis of the two-dimensional distance data output from the laser sensor,
wherein the laser sensor is provided on the traveling body such that a scan plane that is a region through which the laser light passes during rotation of the laser light has a predetermined angle with respect to a horizontal plane.

2. The self-propelled device according to claim 1, further comprising an arm robot provided on the traveling body,
wherein the laser sensor is provided on the traveling body such that the scan plane includes a movement range of the arm robot.

3. The self-propelled device according to claim 1 or 2, further comprising a cover that accommodates the laser sensor,
wherein the laser sensor or the cover is provided on the traveling body such that an incident angle of the laser light with respect to the cover is greater than 0 degrees and smaller than 90 degrees.

4. The self-propelled device according to claim 3, wherein the laser sensor or the cover is provided on the traveling body such that a minimum incident angle of the laser light incident on the cover during rotation of the laser light decreases with an increase in a distance between the laser sensor and the cover.

5. The self-propelled device according to any one of claims 1 to 4, wherein
the controller sequentially acquires the two-dimensional distance data from the laser sensor while rotating the traveling body about a rotation axis in a vertical direction, and executes processing of generating three-dimensional data representing a space around the traveling body on a basis of the two-dimensional distance data that has been sequentially acquired.

6. The self-propelled device according to claim 5, wherein the processing of generating the three-dimensional data is executed on a basis of a condition that the self-propelled device is included in a preset region.

7. The self-propelled device according to claim 5 or 6, wherein
the self-propelled device is capable of communicating with a user terminal for operating the self-propelled device, and
the processing of generating the three-dimensional data is executed on a basis of reception of an execution command based on an operation for executing the processing from the user terminal.

8. The self-propelled device according to any one of claims 1 to 7, wherein the traveling body includes three or more drive wheels.
